# EUROPEAN PATENT SPECIFICATION

(11) **EP 2 554 051 B1**
(45) Date of publication and mention of the grant of the patent: **18.09.2013**
(21) Application number: 11425215.8
(22) Date of filing: 04.08.2011
(51) Int. Cl.: A21C 1/02, A21C 1/14, B01F 7/00, B01F 7/16

(54) **Dough kneader machine and related method of making an alimentary dough**
Knetvorrichtung für Teig und entsprechendes Verfahren zur Herstellung von Teig
Malaxeur de pâte et procédé correspondant pour la production de la pâte alimentaire

(43) Date of publication of application: 06.02.2013
(73) Proprietor: Chiaramello, Antonio, 12100 Cuneo (CN) (IT)
(72) Inventor: Chiaramello, Antonio, 12100 Cuneo (CN) (IT)
(74) Representative: Spina, Alessandro

(56) References cited:
- GB-A- 190 826
- IT-A1- MI20 091 318
- JP-A- 4 235 728

## Description

The present invention relates to a dough kneader and to a method of making alimentary doughs, in particular doughs for fresh pasta, bread and desserts.

In the field of food industry dough kneaders for both domestic and industrial use are known, generally comprising a container, typically made of stainless steel, in which a rotor is rotatably arranged. The rotor is restrained to a shaft of an electric motor and comprises a plurality of mixing paddles.

In order to make a dough for fresh pasta, bread or desserts, a predefined amount of mixtures of flours and/or meals is poured into the container and continuously mixed by rotating the rotor paddles during the preparation of the dough. During the mixing step, the container is usually sealed by a suitable lid and ingredients needed to prepare the desired dough are gradually added to the mixtures of flours and/or meals. The mixing step lasts until a homogeneous dough suitable to be further processed is obtained.

When making fresh pasta, for example, ingredients in a liquid form such as, for example, water and eggs, and possibly other ingredients such as e.g. powdered natural dyes, are added in a predefined amount to the mixtures of flours and/or meals.

In order to obtain a good mixing of the ingredients with the mixtures of flours and/or meals, in particular the liquid ones such as water and eggs, the mixing step of the dough usually lasts between 15 and 20 minutes. However, in such a mixing time it is not always possible to ensure that the finished dough has adequate homogeneity and good organoleptic characteristics.

After the mixing step, which is considered too long by those skilled in the art, a further waiting period may follow, because in order to improve the quality of the finished product the dough this is left to rest for a predefined time before being further processed. In the case of bread, for example, the completion of fermentation is usually awaited.

In order to reduce mixing times it is known to mix the mixtures of flours and/or meals with ingredients in a liquid form injected into the container in the form of a spray.

Patent GB 190826 discloses for example a kneader comprising a container inside which a rotor having an horizontal axis and provided with a plurality of mixing arms is rotatably arranged. The kneader also comprises a reservoir suitable to contain water, oil or other liquid ingredients. Mixtures of flours and/or meals necessary to make a dough are introduced into the container through a supply duct equipped with a vibrating device and ending with an aperture formed in a cover of the kneader. Therefore, the mixtures of flours and/or meals enter the container by gravity in a finely divided form as a result of the vibrations produced by the vibrating device. Since nozzles are arranged in the lid of the kneader, the particles of the mixtures of flours and/or meals come into intimate contact with the liquid ingredients injected by the nozzles before reaching the bottom of the container and being mixed by the rotor. Thanks to these features, the kneader allows to reduce the mixing time of doughs.

The Italian patent application MI2009A001318, in the applicant's name, discloses a kneader for alimentary doughs, comprising a container provided with a tight lid, inside which a rotor having a vertical axis and provided with a plurality of mixing paddles is arranged. The kneader also comprises a plurality of nozzles restrained to the lid and suitable to the inject ingredients necessary to make an alimentary dough, such as water and eggs, into the container in the form of a spray. The vertical axis rotor is configured so as to generate a raising effect of the flour from the bottom of the container towards the lid, thus promoting the contact between the flour and the spray-injected ingredients, whereby it is possible to obtain very homogeneous and elastic doughs in mixing in times shorter than those achievable by the kneaders known in the field.

Despite the numerous types of kneaders known in the field, there is still the need to improve the characteristics of alimentary doughs in terms of homogeneousness and elasticity and to further reduce their mixing times, while ensuring the achievement of high organoleptic characteristics, which is an object of the present invention.

It is also an obj ect of the present invention to provide a kneader and a method of making alimentary doughs allowing to increase the hydration level of alimentary doughs for the benefit of their workability and preservation.

An idea of solution underlying the present invention is to make an alimentary dough by mixing the mixtures of flours and/or meals with the necessary ingredients in countercurrent, thus favoring the intimate contact between them for the benefit of the homogeneousness and the elasticity of the dough. To this end, the rotor has a vertical rotation axis and is configured so as to generate during its rotation a raising effect of the mixtures of flours and/or meals from the bottom of the container towards the lid sealing it and the kneader comprises a plurality of spray nozzles restrained to the lid and so arranged to direct their sprays towards the bottom and the walls of the container. The mixtures of flours and/or meals are thus mixed with the ingredients both in a traditional way, on a generic plane parallel to the bottom of the container due to the swirling movement generated by the rotation of the rotor around its axis, and in countercurrent, on a generic plane perpendicular to the bottom of the container and passing through the axis of rotation of the rotor due to its raising effect.

It is also an idea solution to generate in the container a mixing movement of a swirling type between the particles of the mixtures of flours and/or meals and the ingredients not only with respect to a generic plane parallel to the bottom of the container, but also on a generic plane perpendicular to the bottom of the container and passing through the axis of rotation of the rotor.

To this end, the rotor comprises a flat base and a plurality of paddles restrained thereto and whose free ends are bent towards the axis of rotation of the rotor and inclined both relative to the base and to a plane perpendicular thereto and passing through the axis of rotation. In this way the particles of the mixtures of flours and/or meals raised by the rotor from the bottom of the container towards the lid, and in contact with the sprayed ingredients, are directed from the bent ends of the paddles towards the axis of rotation of the rotor and then fall towards the bottom, where they are raised again by the rotor. In other words, with reference to a generic plane perpendicular to the bottom of the container and passing through the axis of rotation of the rotor, the mixtures of flours and/or meals are made to circulate continuously from the bottom of the container towards the lid being mixed several times and contacting even more intimately the ingredients needed to prepare the dough.

The main advantage offered by the invention is therefore to allow to make alimentary doughs that are even more homogeneous and elastic than those that can be obtained with kneaders known in the field and with a very high level of hydration, because the mixing between the mixtures of flours and/or meals and the liquid ingredients occurs according to swirling movements at the same time on multiple planes perpendicular to each other.

This particular mixing method also allows to further reduce the time needed to make doughs and therefore to increase the productivity of the kneader compared to a kneader having a container of the same size, which is extremely advantageous in pasta factories.

Another advantage offered by the invention is that, thanks to the particular configuration of the rotor, the kneader may also be used to make and/or simply mix other alimentary products such as e.g. sauces, pasta fillings and mayonnaise in very short times.

Further advantages and features of the kneader and the method according to the present invention will be clear to those skilled in the art from the following detailed and non limiting description of an embodiment thereof, with reference to the attached drawings in which:
- figure 1 is a longitudinal section view of a kneader according to the present invention; and
- figures 2, 3 and 4 respectively show a top view and perspective views of the rotor of the kneader of figure 1.

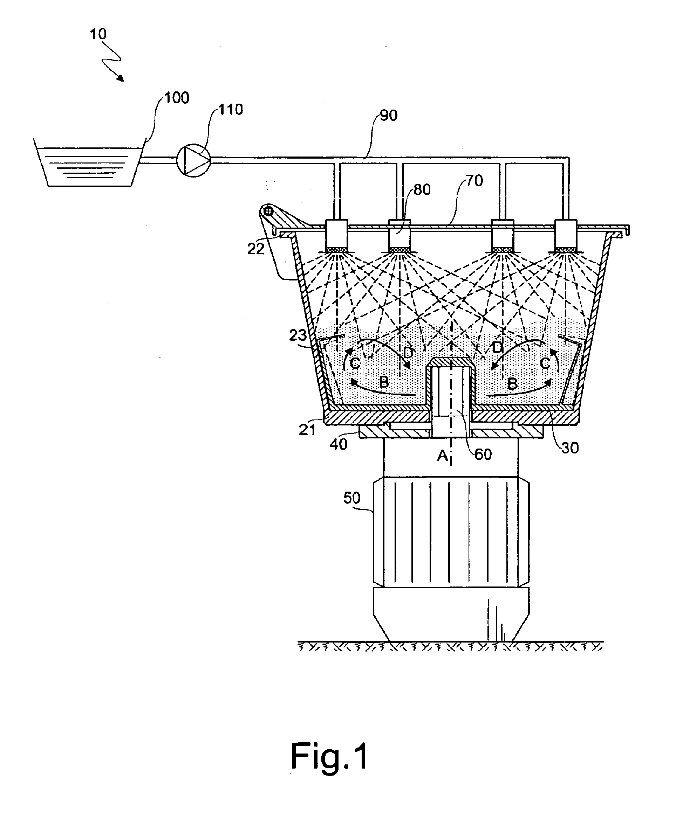

Referring to figure 1, the kneader 1 according to the present invention comprises a container, e.g. made of stainless steel, inside which a rotor 30 provided with a plurality of mixing paddles is rotatably arranged. The container comprises a bottom 21, an open top 22 suitable to allow the introduction of mixtures of flours and/or meals and of ingredients needed to prepare a dough, and peripheral walls 23. In the illustrated embodiment the container has in particular a frustum conical shape widening from the bottom 21 towards the open top 22.

The container is connected through a suitable supporting structure, such as e.g. a flange 40, to an electric motor 50. A shaft 60 of the electric motor 50 protrudes into the container and is coupled for rotation to the rotor 30 via a grooved, polygonal or similar coupling. The kneader 10 also comprises a lid 70 suitable to tightly close the open top 22 of the container during operation.

In an operating condition of the kneader 10 the rotor 30 has a axis of rotation that is substantially perpendicular to the bottom 21 of container and to a supporting surface of the kneader 10, thus being substantially vertical.

The rotor 30 comprises a flat base formed of a plurality of arms that extend radially outwards from a connecting portion 31 allowing to fit the rotor 30 on the shaft 60 of electric motor 50. The rotor 30 also comprises a plurality of paddles restrained to the arms forming the flat base and extending therefrom in a direction that is predominantly perpendicular thereto.

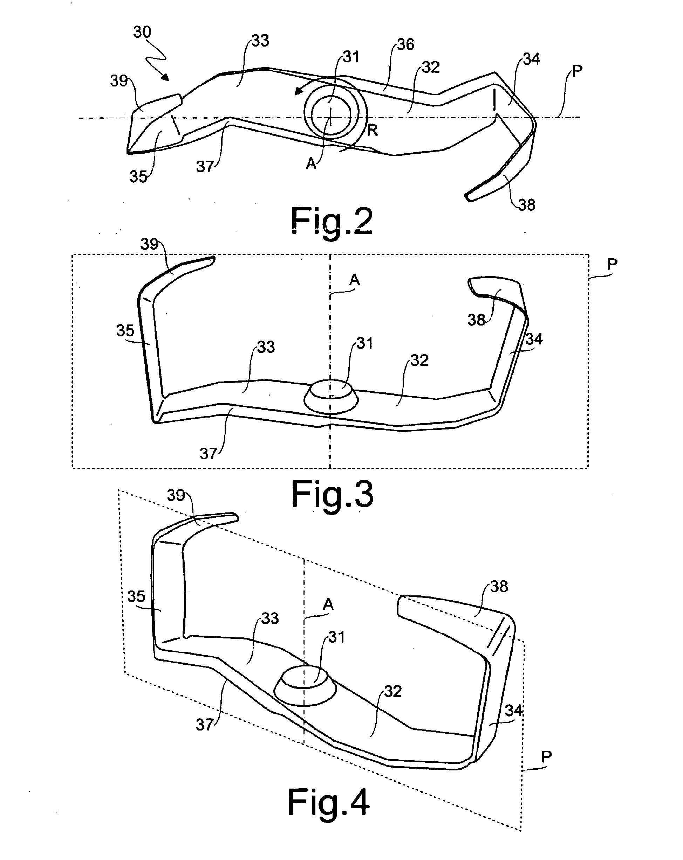

With particular reference to figures 2 to 4, in the illustrated embodiment the flat base of the rotor 30 is formed in particular of two arms 32, 33 which extend from the connecting portion 31 in opposite directions and the rotor 30 comprises a pair of paddles 34, 35 respectively restrained to the free ends of the arms 32, 33.

As shown in detail in figure 2, the arms 32, 33 comprise chamfered surfaces 36, 37 formed along their peripheries on the sides intended to face the rotation direction of the rotor 30, which is schematically shown in the figure by an arrow R.

The rotation of the rotor 30 generates on the mixtures of flours and/or meals, which are arranged in bulk in the container, a swirling movement on a plane generally parallel to the bottom 21 of the container, which urges their particles towards the peripheral walls 23 due to centrifugal effect. The chamfered surfaces 36, 37 formed on the arms 32, 33 instead allow to generate a raising effect of the mixtures of flours and/or meals towards the lid 70, finely dispersing them in particles.

The kneader 10 also comprises a plurality of spraying nozzles 80 suitable to inject in a spray form into the container the liquid ingredients needed for the preparation of an alimentary dough, e.g. water and eggs.

The nozzles 80 are restrained to the lid 70 and arranged so as to direct their sprays towards the bottom 21 and the walls 23 of the container, thus towards the mixtures of flours and/or meals. In figure 1 the sprays injected by the nozzles 80 are schematically shown by dashed lines.

The nozzles 80 are connected to at least one supply line in turn connected to at least one reservoir suitable to contain the liquid ingredients needed to prepare the dough. The liquid ingredients are supplied by means of a supply pump.

In the embodiment illustrated in figure 1, the kneader 10 comprises in particular six spraying nozzles 80 arranged circumferentially and connected to a single supply line 90; the supply line is in turn connected to a single reservoir 100 downstream of which a supply pump 110 is arranged. In longitudinal section view of figure 1 only four of the six nozzles 80 may be seen.

The number of the nozzles 80 and their arrangement with respect to the lid 70, as well as the number of supply lines and reservoirs may vary depending on production needs. However, in view of the axisymmetric shape of the container 20, an axisymmetric arrangement of the nozzles 80, for example along a circumference coaxial to the rotation axis A, is preferable because it allows to distribute the sprays injected by the nozzles in an extremely homogeneous and uniform way.

As described above, the nozzles 80 are arranged so as to direct their sprays towards the bottom 21 and the walls 23 of the container. In this way, the particles of the mixtures of flours and/or meals raised by the chamfered surfaces 36, 37 formed on the arms 32, 33 of the rotor 30 towards the top 22 of the container meet the ingredients sprayed by the nozzles 80 in countercurrent, thus being intimately bound thereto and allowing to obtain very homogeneous and elastic doughs.

According to the present invention, the rotor 30 is also configured to generate in the container a mixing movement of the mixtures of flours and/or meals with the ingredients of a swirling type not only on a generic plane parallel to the bottom 21 of the container, but also on a generic plane perpendicular to the bottom 21 of the container and passing through the rotation axis A of the rotor 30.

For this purpose, as particularly shown in figures 2 to 4, the free ends 38, 39 of the paddles 34, 35 are bent towards the rotation axis A of the rotor 30 and inclined both with respect to the flat base of the rotor 30 and with respect to a plane P perpendicular thereto and passing through its rotation axis. The free ends 38, 39 are oriented such that during rotation of the rotor 30 the particles of the mixtures of flours and/or meals raised from the bottom 21 of the container are urged towards the rotation axis A of the rotor 30 and then towards the bottom 21 of the container, where they are raised again by the rotor 30 as described above.

Referring to a generic plane perpendicular to the bottom 21 of the container and passing through the rotation axis A of the rotor 30, such as the plane of the longitudinal section of Figure 1, the overall effect is that of a swirling movement that causes the particles of the mixtures of flours and/or meals to circulate from the bottom 21 of the container towards its peripheral walls 23 and from the peripheral walls 23 towards the rotation axis A of the rotor 30, and then again towards the bottom 21 of the container.

The swirling movement of the particles of the mixtures flours and/or meals, which are shown in figure 1 by a plurality of dots, is schematically illustrated by a series of arrows. In particular, arrows B and C show the raising action of the particles of the mixtures of flours and/or meals from the bottom 21 of the container towards the peripheral walls 23 and the lid 70 produced by the chamfered surfaces 36, 37 of the arms 32, 33 of the rotor 30, while arrows D show the returning action of the particles towards the bottom 21 of the container produced by the bent ends 38, 39 of the paddles 34, 35 of the rotor 30.

It is understood that the mixing between the particles of the mixtures of flours and/or meals and the liquid ingredients sprayed from the nozzles 80 occurs both during the raising movement of the particles of the mixtures of flours and/or meals towards the lid 70 and when they are deviated towards the rotation axis A of the rotor 30 and fall towards the bottom 21 of the container.

In both cases, mixing occurs in countercurrent thanks to the fact that the sprays injected by the nozzles widen in a fan-like manner towards the bottom 21 and the peripheral walls 23 of the container.

It is also understood that the swirling movement of the particles of the mixtures flours and/or meals on a generic plane perpendicular to the bottom 21 of the container and passing through the rotation axis A of the rotor 30 is combined with their swirling movement on a generic plane parallel to the bottom 21 of the container generated by the rotation of the rotor 30. Therefore, mixing occurs simultaneously on perpendicular planes, thus giving rise to a turbulence which has the technical effect of allowing an extremely high degree of homogenization among the components of the alimentary dough, as well as a very high hydration level of the particles of the mixtures of flours and/or meals by the liquid ingredients injected by the nozzles 80, which greatly increases the elasticity of the dough, as well as its processability and preservation.

Several tests have allowed the inventor to verify that doughs obtainable with the kneader according to the present invention may be preserved for a long time and are very easy to process thanks to their high homogeneity, elasticity and compactness, thus greatly facilitating subsequent operations such as e.g. sheeting or extrusion.

The method of mixing on planes perpendicular to each other also allows to prepare alimentary doughs in very short times compared to the mixing times that characterize kneaders known in the field.

By using a prototype of the kneader according to the invention the inventor has e.g. verified that it is possible to make a dough for fresh pasta dough of 35 kg in a time comprised between 70 and 120 seconds, which results in a hourly productivity of the kneader that can exceed 800 kg/h also taking into account the loading times of the machine.

According to a further aspect of the invention, and with particular reference to figures 2 to 4, the paddles 34, 35 restrained to the arms 32, 33 may be advantageously inclined with respect to them, i.e. relative to the flat base of the rotor 30, radially outwards with respect to the rotor 30 and also inclined in opposite directions with respect to the plane P.

During rotation of the rotor 30, the inclination of the paddles 34, 35 relative to the arms 32, 33 allows to generate a further raising effect of the mixtures of flours and/or meals contained in the container, which adds to the raising effect generated by the chamfered surfaces 36, 37 formed on the arms 32, 33, thus contributing to finely disperse their particles during the mixing with the ingredients injected by the nozzles 80. Moreover, the inclination of the paddles 34, 35 relative to the plane P contributes to the swirling movement of the mixtures of flours and/or meals parallel to the bottom 21 of the container.

It is understood that the number of arms forming the flat base of the rotor 30 may vary and consequently also the number of the mixing paddles, allowing to configure different rotors depending on the production needs of the kneader.

In addition, the arrangement of the paddles at the free ends of the arms is not binding in the invention. In fact, they could also be arranged in a position between the connecting portion and the ends of the arms. However, the arrangement of the paddles at the ends of the rotor arms is advantageous, because it allows their rotation close to the peripheral walls of the container, thus moving the whole amount of mixtures of flours and/or meals present therein.

The embodiment of the invention herein described and illustrated is just an example susceptible of numerous variants. For example, the kneader may include an automatic control system allowing to control the rotation speed of the rotor and the injection pressure of the sprayed ingredients according to one or more programs stored in control unit. Moreover, the number of paddles restrained to each arm may be greater than one, thereby increasing the raising effect of the mixtures of flours and/or meals and, more generally, enhancing the mixing action of the dough.

## Claims

1. A kneader (10) for alimentary doughs comprising a container provided with a tight lid (70) and a rotor (30) rotatably arranged in said container around a vertical rotation axis (A), said kneader (10) further comprising a plurality of spraying nozzles (80) restrained to said lid (70) and arranged so as to direct their sprays towards the bottom (21) and the peripheral walls (23) of the container, wherein said rotor (30) comprises a flat base made up of a plurality of arms (32, 33) and a plurality of mixing paddles (34, 35) extending from said arms (32, 33) in a direction that is predominantly perpendicular thereto, and wherein the arms (32, 33) of the rotor (30) comprise chamfered surfaces (36, 37) formed along their peripheries on the sides intended to face the rotation direction (R) of the rotor (30), **characterized in that** the mixing paddles (34, 35) comprise free ends (38, 39) that are bent towards said rotation axis (A) of the rotor (30) and inclined both with respect to the flat base of the rotor (30) and with respect to a plane (P) perpendicular thereto and passing through the rotation axis (A).

2. A kneader (10) according to claim 1, wherein the mixing paddles (34, 35) are inclined both with respect to the flat base of the rotor (30) and with respect to a plane (P) perpendicular thereto and passing through the rotation axis (A).

3. A kneader (10) according to claim 2, wherein the mixing paddles (34, 35) are inclined in opposite directions with respect to the plane (P) perpendicular to the base of the rotor (30) and passing through its rotation axis (A).

4. A kneader (10) according to any one of claims 1 to 3, wherein the mixing paddles (34, 35) are arranged at the free ends of the arms (32, 33).

5. A kneader (10) according to any one of claims 1 to 4, wherein said spraying nozzles (80) are arranged on the lid (70) along a circumference coaxial to the rotation axis (A) of the rotor (30).

6. A kneader (10) according to any one of claims 1 to 5, further comprising an automatic control system suitable to allow to control the rotation speed of the rotor (30) and the injection pressure of liquid ingredients according to one or more programs stored in a control unit.

7. A method for making an alimentary dough based on mixtures of flours and/or meals comprising the steps of:
- pouring a predefined amount of mixtures of flours and/or meals into a container of a kneader (10) according to claim 1;
- mixing said mixtures of flours and/or meals by rotating a rotor (30) rotatably arranged in said container; and
- injecting a predefined amount of ingredients in a spray form contemporaneously to the mixing step, by directing the sprays towards a bottom (21) and peripheral walls (23) of the container,
wherein during said mixing step the mixtures of flours and/or meals are rotated with respect to a plane parallel to the bottom (21) of the container and at the same time made to circulate with a swirling movement among the bottom (21) of the container, its peripheral walls (23) and a rotation axis (A) of the rotor (30) on a plane perpendicular to the bottom (21) of the container and passing through said rotation axis (A).

8. A method according to claim 7, wherein the rotation movements of the mixtures of flours and/or meals relative to a plane parallel to the bottom (21) of the container and to a plane perpendicular to the bottom (21) of the container and passing through the rotation axis (A) of the rotor (30) are generated by the rotor (30).

## Patentansprüche

1. Knetvorrichtung (10) für Teige, umfassend einen Behälter mit einem dichten Deckel (70) und einem Rotor (30), welcher in dem besagten Behälter um eine vertikale Drehachse (A) drehbar angeordnet ist, wobei die besagte Knetvorrichtung (10) ferner eine Mehrzahl von Sprühdüsen (80) umfasst, welche an dem besagten Deckel (70) zurückgehalten und derart angeordnet sind, dass sie ihre Sprühstrahlen zu dem Boden (21) und den Umfangswänden (23) des Behälters richten, wobei der besagte Rotor (30) einen flaches Basisteil aufweist, das aus einer Mehrzahl von Armen (32, 33) hergestellt ist sowie aus einer Mehrzahl von Mischpaddeln (34, 35), welche von besagten Armen (32, 33) wegstreben in einer Richtung, die überwiegend lotrecht dazu ist, und wobei die Arme (32, 33) des Rotors (30) abgeschrägte Oberflächen (34, 35) aufweisen entlang ihren Umfängen, ausgeformt auf den Seiten, welche dazu ausersehen sind, in Drehrichtung (R) des Rotors (30) zu weisen, **dadurch gekennzeichnet, dass** die Mischpaddel (34, 35) freie Enden (38, 39) aufweisen, welche zu der Rotationsachse (A) des Rotors (30) hin gebogen sind sowie geneigt sowohl im Hinblick auf das flache Basisteil des Rotors (30) als auch bezüglich einer dazu lotechten Ebene (P), die durch die Drehachse (A) hindurchläuft.

2. Knetvorrichtung (10) nach Anspruch 1, wobei die Mischpaddel (34, 35) geneigt sind sowohl im Hinblick auf das flache Basisteil des Rotors (30) als auch bezüglich einer dazu lotechten Ebene (P), die durch die Drehachse (A) hindurchläuft.

3. Knetvorrichtung (10) nach Anspruch 2, wobei die Mischpaddel (34, 35) in entgegengesetzte Richtungen geneigt sind bezüglich einer zu dem flachen Basisteil des Rotors (30) lotechten Ebene (P), die durch die Drehachse (A) hindurchläuft.

4. Knetvorrichtung (10) nach einem der Ansprüche 1 bis 3, wobei die Mischpaddel (34, 35) an den freien Enden der Arme (32, 33) angeordnet sind.

5. Knetvorrichtung (10) nach einem der Ansprüche 1 bis 4, wobei die Sprühdüsen (80) an dem Deckel (70) entlang eines zu der Drehachse (A) des Rotors (30) koaxialen Umfangs angeordnet sind.

6. Knetvorrichtung (10) nach einem der Ansprüche 1 bis 5, ferner umfassend ein automatisches Steuersystem, welches geeignet ist, die Steuerung der Drehgeschwindigkeit des Rotors (30) zu erlauben sowie die Steuerung des Einspritzdrucks der flüssigen Zutaten, gemäß einem oder mehreren, in einer Steuereinheit gespeicherten Programmen.

7. Verfahren zur Herstellung von Teig auf der Basis von Mischungen von feinen Mehlen und/oder groben Mehlen, umfassend die folgenden Schritte:
- Eingießen einer vorbestimmten Menge von Mischungen von feinen Mehlen und/oder groben Mehlen in einen Behälter einer Knetvorrichtung (10) nach Anspruch 1;
- Mischen der besagten Mischungen von feinen Mehlen und/oder groben Mehlen durch Drehung eines Rotors (30), welcher in dem besagten Behälter drehbar angeordnet ist; und
- Einspritzen einer vorbestimmten Menge von Zutaten in Form eines Sprühstrahls, gleichzeitig mit dem Mischschritt, unter Richten des Sprühstrahls auf einen Boden (21) sowie auf Umfangswände (23) des Behälters,
wobei während des besagten Mischschrittes die Mischungen von feinen und/oder groben Mehlen im Verhältnis zu einer Ebene parallel zum Boden (21) des Behälters rotiert werden und gleichzeitig veranlasst werden, mit einer wirbelnden Bewegung zwischen dem Boden (21) des Behälters, dessen Umfangswänden (23) und einer Rotationsachse (A) des Rotors (30) zu zirkulieren, auf einer Ebene lotrecht zum Boden (21) des Behälters, und durch die besagte Rotationsachse (A) hindurchzutreten.

8. Verfahren nach Anspruch 7, wobei die Rotationsbewegungen der Mischungen aus feinen Mehlen und/oder groben Mehlen bezüglich einer Ebene parallel zum Boden (21) des Behälters und zu einer Ebene lotrecht zum Boden (21) des Behälters unter Passieren durch die Rotationsachse (4) des Rotors (30) von dem Rotor (30) erzeugt wird.

## Revendications

1. Pétrin (10) pour pâtes alimentaires comprenant un récipient prévu avec un couvercle étanche (70) et un rotor (30) agencé en rotation dans ledit récipient autour d'un axe de rotation vertical (A), ledit pétrin (10) comprenant en outre une pluralité de buses de pulvérisation (80) retenues sur ledit couvercle (70) et agencées afin de diriger leurs pulvérisations vers le fond (21) et les parois périphériques (23) du récipient, dans lequel ledit rotor (30) comprend une base plate composée d'une pluralité de bras (32, 33) et d'une pluralité de pales de mélange (34, 35) s'étendant à partir desdits bras (32, 33) dans une direction qui est principalement perpendiculaire à ces derniers, et dans lequel les bras (32, 33) du rotor (30) comprennent des surfaces chanfreinées (36, 37) formées le long de leurs périphéries sur les côtés prévus pour faire face à la direction de rotation (R) du rotor (30), **caractérisé en ce que** les pales de mélange (34, 35) comprennent des extrémités libres (38, 39) qui sont pliées vers ledit axe de rotation (A) du rotor (30) et inclinées à la fois par rapport à la base plate du rotor (30) et par rapport à un plan (P) perpendiculaire à cette dernière et passant par l'axe de rotation (A).

2. Pétrin (10) selon la revendication 1, dans lequel les pales de mélange (34, 35) sont inclinées à la fois par rapport à la base plate du rotor (30) et par rapport à un plan (P) perpendiculaire à cette dernière et passant par l'axe de rotation (A).

3. Pétrin (10) selon la revendication 2, dans lequel les pales de mélange (34, 35) sont inclinées dans des directions opposées par rapport au plan (P) perpendiculaire à la base du rotor (30) et passant par son axe de rotation (A).

4. Pétrin (10) selon l'une quelconque des revendications 1 à 3, dans lequel les pales de mélange (34, 35) sont agencées aux extrémités libres des bras (32, 33).

5. Pétrin (10) selon l'une quelconque des revendications 1 à 4, dans lequel lesdites buses de pulvérisation (80) sont agencées sur le couvercle (70) le long d'une circonférence coaxiale par rapport à l'axe de rotation (A) du rotor (30).

6. Pétrin (10) selon l'une quelconque des revendications 1 à 5, comprenant en outre un système de commande automatique approprié pour permettre de réguler la vitesse de rotation du rotor (30) et la pression d'injection des ingrédients liquides selon un ou plusieurs programmes mémorisés dans une unité de commande.

7. Procédé pour fabriquer une pâte alimentaire basée sur des mélanges de farines et/ou de farines brutes comprenant les étapes consistant à :
- verser une quantité prédéfinie de mélanges de farines et/ou de farines brutes dans un récipient d'un pétrin (10) selon la revendication 1 ;
- mélanger lesdits mélanges de farines et/ou de farines brutes en faisant tourner un rotor (30) agencé en rotation dans ledit récipient ; et
- injecter une quantité prédéfinie d'ingrédients sous une forme pulvérisée simultanément à l'étape de mélange, en dirigeant les pulvérisations vers un fond (21) et les parois périphériques (23) du récipient,
dans lequel pendant ladite étape de mélange, les mélanges de farines et/ou de farines brutes sont entraînés en rotation par rapport à un plan parallèle au fond (21) du récipient et en même temps autorisés à circuler avec un mouvement tourbillonnant parmi le fond (21) du récipient, ses parois périphériques (23) et un axe de rotation (A) du rotor (30) sur un plan perpendiculaire au fond (21) du récipient et passant par ledit axe de rotation (A).

8. Procédé selon la revendication 7, dans lequel les mouvements de rotation des mélanges de farines et/ou de farines brutes par rapport à un plan parallèle au fond (21) du récipient et à un plan perpendiculaire au fond (21) du récipient et passant par l'axe de rotation (A) du rotor (30) sont générés par le rotor (30).
